(19) Europäisches Patentamt

European Patent Office

Office européen des brevets

(11) Publication number: **0 268 206 B1**

(12) **EUROPEAN PATENT SPECIFICATION**

(45) Date of publication of patent specification: **02.01.92**　(51) Int. Cl.⁵: **A22C 11/02**

(21) Application number: **87116695.5**

(22) Date of filing: **12.11.87**

(54) **Forming, filling and clipping machine for food products.**

(30) Priority: **17.11.86 IT 1812186**

(43) Date of publication of application:
**25.05.88 Bulletin 88/21**

(45) Publication of the grant of the patent:
**02.01.92 Bulletin 92/01**

(84) Designated Contracting States:
**DE FR GB**

(56) References cited:
**DE-A- 2 420 202**
**DE-C- 3 121 101**
**FR-A- 2 162 805**
**GB-A- 2 075 459**
**GB-A- 2 100 110**

(73) Proprietor: **INOX MECCANICA S.r.l.**
**Via Morandi 4**
**I-46047 Porto Mantovani (Province of Mantova)(IT)**

(72) Inventor: **Bolzacchini, Aldo**
**Via Ouarantore 20/A**
**I-46047 Porto Mantovano (Prov. Mantova)(IT)**

(74) Representative: **Modiano, Guido et al**
**MODIANO, JOSIF, PISANTY & STAUB**
**Modiano & Associati Via Meravigli, 16**
**I-20123 Milano(IT)**

## Description

The present invention relates to a forming, filling and clipping machine for food products.

It is known that currently the obtainment of the food product consisting of a piece of meat, such as for example bacon or salted meat, in a substantially cylindrical shape filled into a synthetic casing clipped at the ends, is achieved by means of a series of non automatic operations, which entail the use of a mold on which the casing is manually inserted, and of a twin-head clipping machine on which the operator first of all provides the clipping of one end, and subsequently the manual traction of the casing, forming the product, finally performing the clipping of the other end, cutting the casing.

This procedure has the evident disadvantageous characteristic of requiring a considerable use of manual labor, such as to considerably burden the cost of the product.

Also known from GB-A-2,075,059 is an apparatus for stuffing a pliable article into a casing. The ham is placed in a chamber, a lid is closed, and a piston is then operated to compress the ham laterally. A piston is then advanced to force the ham into a tube, and a central part of the piston continues to advance to push the ham right through the tube into the casing. Air escapes through holes and between the shirred casing and its support, and rings hold back the casing from slipping forwardly.

The aim of the present invention is to provide a forming, filling and clipping machine which allows a good automation of the individual operations, so as to have great productivity with a low use of labor, and which prepares the casing in an optimum condition for clipping.

The proposed aim is achieved by a forming, filling and clipping machine for food products comprising a mold adapted to form the product, provided with a pusher for the conveyance of said product after its forming through a casing-holder tube which extends from a wall of the mold; means adapted to determine the braking or locking of a casing in its sliding movement in contact with the casing-holder tube; characterized in that said mold is supported by a slide having means for its movement in the longitudinal direction of the machine which coincides with the direction of advancement of the processed product; a device for locking the product on a resting plane adapted to receive said product at the output from the casing-holder tube; a clipping head supported by a slide which is arranged in an intermediate position with respect to the slide which is movable in a longitudinal direction and with respect to the locking device and is provided with means for moving in the transverse direction of the machine, said clipping head being provided with an abutment element which is appropriately shaped and provided with means for its movement, and being adapted to arrange itself in such a position as to make contact with the end of the product which faces said head when said product is located at the locking device.

Further characteristics and advantages will become apparent from the description of a preferred, but not exclusive, embodiment of the invention, illustrated only by way of non-limitative example in the accompanying drawings, wherein:

figure 1 is a perspective view of the invention in the condition in which it is arranged when ready to receive a product to be processed;

figure 2 is a partial perspective view of the invention in the moment immediately preceding the clipping and cutting operation.

With reference to the above described figures, the reference numeral 1 indicates the mold supported by the structure 1a adapted for the formation of the product, with the cover 2 moved by the pneumatic cylinder 2a; said mold is provided with the slideable screen 3 for the protection of the operator, and means are provided, not illustrated in the figure, by virtue of which the closure of the cover 2 occurs only when said screen 3 has been closed. The numeral 4 then indicates a pusher actuated by a pneumatic cylinder contained inside the carter 5, adapted to push the product, after its forming, through the casing-holder tube 6 which indeed leads with one of its ends into the mold 1; at said end the tube 6 is connected to the plate 6a adapted to removably associate, with a wall of the mold, by insertion in the sliding guides 7a and 7b and thus it is easy to remove said tube when the supply of casing 8 accumulated proximate to said plate is exhausted, to replace it with a new tube loaded with casing.

The machine is provided with means adapted to determine the braking or locking of the casing 8 in its sliding movement in contact with the casing-holder tube 6, comprising the two counterposed skids 9 and 10, respectively actuated by the pneumatic cylinders 9a and 10a supported by the plates 9b and 10b and adapted to operate with differentiated pressure as will become apparent in the description of the operation of the invention.

One of the main characteristics of the invention resides in the fact that the structure 1a supporting the mold 1 and the plates 9b and 10b supporting the means for braking and locking the casing on the tube 6 are connected to the slide 11 which is provided with means for moving in the longitudinal direction of the machine, which coincides with the direction of movement of the processed product, comprising the pneumatic cylinder 12 with the end of the stem connected to the crosspiece 13 fixed to flaps such as 13a which extend from the lower face of said slide 11.

The clipping head, generally indicated by the reference numeral 14, is mounted on the slide 15 provided with means for moving in a transverse direction with respect to the machine between the two extreme positions respectively illustrated in the figures, and comprises in a known manner the pincers 14a operated by the pneumatic cylinder 14b, of the type capable of applying to the casing two clips with a small string such as 14c at the clip nearest to the tube 6, and to perform the cutting of the casing in the portion comprised between the two clips.

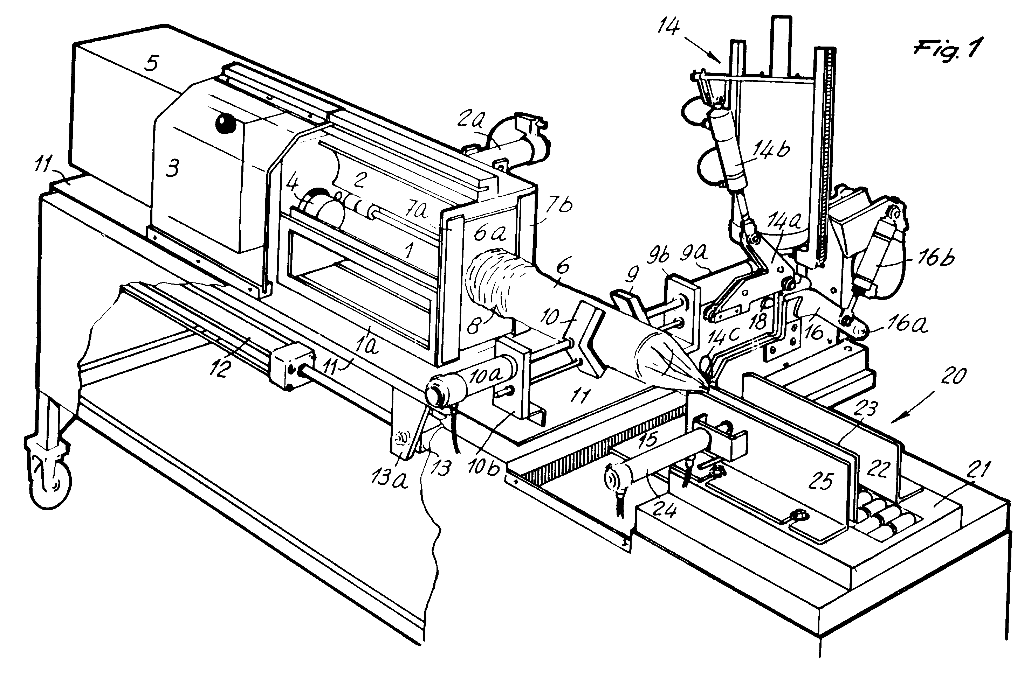

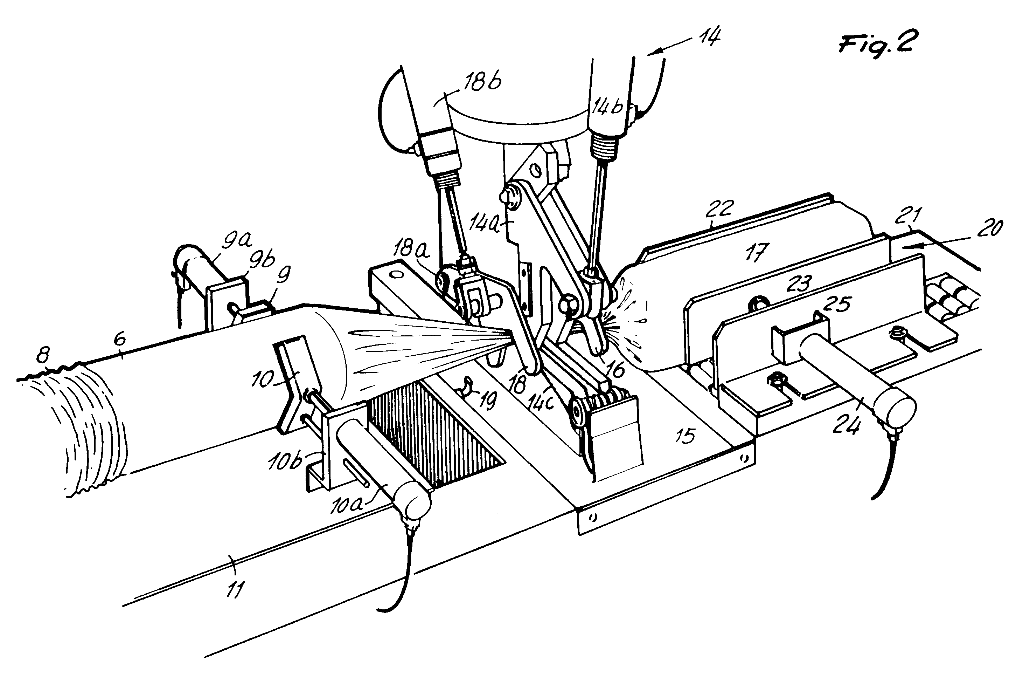

Said clipping head is provided with the abutment element 16 pivoted at 16a and moved by the pneumatic cylinder 16b, which is adapted to move from the position illustrated in figure 1 to the position illustrated in figure 2 substantially in contact with the end of the product 17, as will become apparent in the description of the operation, and is furthermore provided with the fork 18 pivoted at 18a and moved by the pneumatic cylinder 18b, which has the function of pushing the casing into the position indicated in figure 2 so as to impart thereto the optimum arrangement in the clipping area. The nozzle 19 is also provided on the slide 15 and is adapted to release a stream of air substantially from below upwards against the casing protruding from the tube 6, according to functional aspects which will be specified hereinafter.

Finally, the reference numeral 20 generally indicates a device for locking the product 17 so as to rest on the roller table 21, comprising the substantially vertical fixed wall 22 having a longitudinal direction, and the parallel wall 23 which is transversely movable by virtue of the action of the pneumatic cylinder 24 supported by the fixed wall 25 which is removably locked in an adjustable position.

The description of the operation of the invention starts from the condition illustrated in figure 1, with the machine ready to receive the product to be processed: the mold 1 is open, the casing 8 has a portion protruding from the casing-holder tube 6 clipped at the end with a string, the slide 11 is at its most advanced excursion limit in the direction of advancement of the product during the processing step, the slider 15 supporting the clipping head is at its outward excursion limit and the fork 18, the pincers 14a and the abutment element 16 are raised on said head, the wall 23 of the locking device 20 is in open position, i.e. in the position farthest away from the fixed wall 22, and finally there is low pressure in the pneumatic cylinders 9a and 10a for the control of the skids 9 and 10, so that said skids can perform the function of braking the casing 8 in its sliding movement in contact with the tube 6.

The operator inserts a piece of meat into the mold 1 and, closing the screen 3, determines the closure of the cover 2; the pie ce is thus formed, and the operator starts the automatic processing sequence which first of all provides the entire movement of the pusher 4 such as to move the formed piece into the tube 6 until it makes contact with the clipped end of the casing 8, and so as to make it subsequently reach the roller table 21, in the position illustrated in figure 2, with unwinding of the casing from the tube 6.

In determining the contact grip of the piece with the clipped end of the casing, with expulsion of the air contained therein, a primary role is played by the braking of the casing exerted by the skids 9 and 10 pushed by a reduced pressure in the actuation cylinders against said casing in contact with the tube 6.

The product resting on the plane 21 is gripped between the wall 22 and the wall 23 which is advanced so as to lock it, so as to allow the trouble-free retraction of the pusher 4 to the initial position illustrated in figure 1. At this point the slide 15 supporting the clipping head can advance, reaching the excursion limit indicated in figure 2, and the pincers 14a of said clipper descends; the abutment element 16 also descends, so as to substantially make contact with the product 17 and thus, after an increase in the pressure in the cylinders actuating the skids 9 and 10 has moved the same into the condition of locking the casing on the tube 6, and after the locking device 20 has opened, the slide 11 can start moving with a direction of movement which is opposite to that performed by the product to determine the traction of the casing.

In this step the presence of the abutment element 16 prevents the end of the product from deformating by elongation, possibly invading the clipping area, maintaining instead a substantially hemispherical rounded form, and prepares the casing in the optimum condition for clipping.

This function is also performed by the subsequent descent of the fork 18, and the situation at this point is the one illustrated in figure 2; the clipping head then performs the double clipping with an intermediate cut, so as to complete the processing of the product 17 and prepares the casing with the end thereof clipped with a string for the processing of a subsequent product, and the pincers 14, the fork 18 and the abutment element 16 subsequently rise.

The skids 15 and 11 also return to their initial condition illustrated in figure 1, and at the beginning of the movement of the slide 15 the emission of a stream of air from the nozzle 19 against the casing 8 in the portion protruding from the tube 6 is caused, so as to ensure the disengagement of the end clipped with a string from the clipping head.

From what has been described it is apparent that the high automation achieved by the machine allows an optimum processing of the product from the quality point of view, with a considerable saving of labor with respect to the systems currently in use.

The invention thus described is susceptible to numerous modifications and variations: moreover, all the elements may be replaced with other technically equivalent elements. In the practical embodiment of the invention, the materials employed, as well as the shapes and dimensions, may be any suitable.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Forming, filling and clipping machine for food products comprising a mold (1) adapted to form the product, provided with a pusher (4) for the conveyance of said product after its forming through a casing-holder tube (6) which extends from a wall of the mold (1); means (9,9a,9b,10,10a,10b) adapted to determine the braking or locking of a casing (8) in its sliding movement in contact with the casing-holder tube (6); characterized in that said mold is supported by a slide (11) having means (12) for its movement in the longitudinal direction of the machine which coincides with the direction of advancement of the processed product; a device (20) for locking the product (17) on a resting plane (21) adapted to receive said product at the output from the casing-holder tube (6); a clipping head (14) supported by a slide (15) which is arranged in an intermediate position with respect to the slide (11) which is movable in a longitudinal direction and with respect to the locking device (20) and is provided with means for moving in the transverse direction of the machine, said clipping head (14) being provided with an abutment element (16) which is appropriately shaped and provided with means (16b) for its movement, and being adapted to arrange itself in such a position as to make contact with the end of the product (17) which faces said head when said product is located at the locking device (20).

2. Machine according to claim 1, characterized in that the clipping head (14) is provided, at the face facing the casing-holder tube (6), with a fork (18) pivoted thereon and provided with movement means (18b), adapted to impart to the casing (8) the optimum arrangement in the clipping area.

3. Machine according to one or more of the preceding claims, characterized by the presence on the slide (15) which supports the clipping head (14) of a nozzle (19) adapted to emit, after the clipping, a stream of air substantially directed from below upwards against the portion of casing protruding from the casing-holder tube (6), so as to ensure the release of the end clipped with a possible string from the clipping head (14).

4. Machine according to one or more of the preceding claims, characterized in that the mold (1) is provided with a screen (3) to protect the operator, and with means adapted to determine its closure upon the closure of said screen (3).

5. Machine according to one or more of the preceding claims, characterized in that the means for the movement of the slides (11,15) which are respectively movable in a longitudinal and transverse direction consist of pneumatic cylinders (12,14b).

6. Machine according to one or more of the preceding claims, characterized in that the casing-holder tube (6) is provided at one end with a plate (6a) adapted to removably associate, by insertion in sliding guides (7a,7b), with a wall of the mold (1).

7. Machine according to one or more of the preceding claims, characterized in that the means adapted to determine the braking or the locking of the casing (8) in its sliding movement in contact with the casing-holder tube (6) comprise two substantially counterposed skids (9,10) actuated by pneumatic cylinders (9a,10a) adapted to operate with differentiated pressure.

8. Machine according to one or more of the preceding claims, characterized in that the device (20) for locking the product (17) on a resting plane at the output from the casing-holder tube (6) comprises a substantially vertical fixed wall (22) having a longitudinal direction and a substantially parallel facing wall (23), movable in a transverse direction, so as to compress the product against said fixed wall.

## Revendications

1. Machine à former, bourrer et lier des produits alimentaires, comprenant un moule (1) adapté pour former le produit et équipé d'un poussoir (4) pour transporter le produit, après sa mise en forme, à travers un tube porte-boyau (6) partant d'une paroi du moule (1), et des moyens (9,9a,9b,10,10a,10b) adaptés pour effectuer le freinage ou le blocage d'un boyau (8) dans son mouvement coulissant en contact avec le tube porte-boyau (6), caractérisée en ce que ce moule est supporté par un coulisseau (11) ayant des moyens (12) pour le déplacer dans la direction longitudinale de la machine, laquelle direction coïncide avec la direction de l'avancement du produit traité, en ce qu'un dispositif (20) est prévu pour bloquer le produit (17) sur un plan d'appui (21) adapté pour recevoir ce produit au niveau de la sortie du tube porte-boyau (6), et en ce qu'une tête de liage (14) est supportée par un coulisseau (15), disposé en une position intermédiaire par rapport au coulisseau (11) mobile dans une direction longitudinale et par rapport au dispositif de blocage (20) et équipé de moyens pour le déplacer dans la direction transversale de la machine, cette tête de liage (14) étant équipée d'un élément de butée (16) de forme appropriée et équipé de moyens (16b) pour le déplacer, cet élément étant adapté pour se disposer dans une position lui permettant d'entrer en contact avec l'extrémité du produit (17) en vis-à-vis de la tête lorsque ce produit est situé au niveau du dispositif de blocage (20).

2. Machine selon la revendication 1, caractérisée en ce que la tête de liage (14) est équipée, au niveau de la face en vis-à-vis du tube porte-boyau (6), d'une fourche (18) articulée sur elle et équipée de moyens de mouvement (18b) adaptés pour donner au boyau (8) la disposition optimale dans la zone de liage.

3. Machine selon l'une ou plusieurs des revendications précédentes, caractérisée par la présence sur le coulisseau (15), qui supporte la tête de liage (14), d'une buse (19) adaptée pour souffler, après l'opération de liage, un courant d'air dirigé pratiquement d'en dessous vers le haut contre la portion du boyau dépassant du tube porte-boyau (6) pour assurer la libération de l'extrémité liée avec une ficelle éventuelle de la tête de liage (14).

4. Machine selon l'une ou plusieurs des revendications précédentes, caractérisée en ce que le moule (1) est équipé d'un écran (3) pour protéger l'opérateur, et de moyens adaptés pour déterminer sa fermeture lors de la fermeture de l'écran (3).

5. Machine selon l'une ou plusieurs des revendications précédentes, caractérisée en ce que les moyens pour le déplacement des coulisseaux (11,15), qui sont respectivement mobiles dans une direction longitudinale et dans une direction transversale, sont constitués par des vérins pneumatiques (12,14b).

6. Machine selon l'une ou plusieurs des revendications précédentes, caractérisée en ce que le tube porte-boyau (6) est équipé à une extrémité d'une plaque (6a) adaptée pour être associée de façon amovible, par introduction dans des glissières (7a,7b), à une paroi du moule (1).

7. Machine selon l'une ou plusieurs des revendications précédentes, caractérisée en ce que les moyens adaptés pour effectuer le freinage ou le blocage du boyau (8) dans son mouvement de coulissement en contact avec le tube porte-boyau (6) comprennent deux sabots pratiquement en vis-à-vis (9,10) actionnés par des vérins pneumatiques (9a,10a) adaptés pour fonctionner avec des pressions différentes.

8. Machine selon l'une ou plusieurs des revendications précédentes, caractérisée en ce que le dispositif (20) pour bloquer le produit (19) sur un plan d'appui au niveau de la sortie du tube porte-boyau (6) comprend une paroi longitudinale fixe pratiquement verticale (22) et une paroi pratiquement parallèle en vis-à-vis (23), mobile dans une direction transversale, de façon à comprimer le produit contre la paroi fixe.

## Patentansprüche

1. Form-, Füll- und Abbindemaschine für Nahrungsmittelprodukte mit einer Form (1) zum Formen des Produkts, welche einen Ausstoßer (4) zum Befördern des Produkts nach seinem Formen durch ein hüllehaltendes Rohr (8), das von einer Wand der Form (1) sich erstreckt, aufweist, mit Mitteln (9, 9a, 9b, 10, 10a, 10b), die dazu bestimmt sind, die Gleitbewegung einer Hülle (8) in Kontakt mit dem hüllehaltenden Rohr (6) zu bremsen oder anzuhalten, **dadurch gekennzeichnet,** daß die Form (1) von einem Schlitten (11) getragen wird, der Mittel (12) für seine Bewegung in Längsrichtung der Maschine aufweist, die übereinstimmt mit der Vorschubbewegung des verarbeiteten Produkts, eine Vorrichtung (20) zum Festhalten des Produkts (17) auf einer Auflagefläche (21) zur Aufnahme des Produkts am Ausgang des hüllehaltenden Rohrs (6) vorgesehen ist, mit einem Abbindekopf (14), der von einem Schlitten (15) getragen wird, der in einer Zwischenstellung in Bezug auf den in Längsrichtung bewegbaren Schlitten und in Bezug auf die Festhaltevorrichtung (20) angeordnet und mit Mitteln zur Bewegung in Querrichtung der Maschine versehen ist, wobei der Abbindekopf (14) mit einem Anschlagelement (16) versehen ist, das eine geeignete Form aufweist und mit Mitteln für seine Bewegung versehen ist und das sich selbst in eine solche Stellung anordnet, bei welcher es in Kontakt steht mit demjenigen Ende des Produkts (17), das zum Kopf weist, wenn das Produkt in der Festhaltevorrichtung (20) angeordnet ist.

2. Maschine nach Anspruch 1, **dadurch gekennzeichnet,** daß der Abbindekopf (14) an der zum hüllehaltenden Rohr (6) weisenden Seite mit einer an ihm schwenkbaren Gabel (18) und weiterhin mit Bewegungsmitteln (18b) versehen ist, um eine optimale Anordnung der Hülle (8) im Abbindebereich zu gewährleisten.

3. Maschine nach einem oder mehreren der vorhergehenden Ansprüche, **gekennzeichnet durch** das Vorhandensein einer Düse (19) auf dem den Abbindekopf (14) tragenden Schlitten (15), welche nach dem Abbinden einen Luftstrom ausstößt, der im wesentlichen von unten nach oben gegen den Teil der Hülle gerichtet ist, der von dem hüllehaltenden Rohr (6) übersteht, um die Freigabe des mit einem möglichen Bindfaden abgebundenen Endes vom Abbindekopf (14) sicherzustellen.

4. Maschine nach einem oder mehreren der vorhergehenden Ansprüche, **dadurch gekennzeichnet,** daß die Form (1) mit einem Schirm (3) zum Schutz der Bedienungsperson und mit Mitteln zur Bestimmung seines Verschließens nach dem Schließen dieses Schirms (3) versehen ist.

5. Maschine nach einem oder mehreren der vorhergehenden Ansprüche, **dadurch gekennzeichnet,** daß die Mittel zur Bewegung der Schlitten (11,15), welche in Längs- bzw. Querrichtung bewegbar sind, aus pneumatischen Zylindern (12, 14b) bestehen.

6. Maschine nach einem oder mehreren der vorhergehenden Ansprüche, **dadurch gekennzeichnet,** daß das hüllehaltende Rohr (6) an einem Ende mit einer Platte (6a) versehen ist, welche lösbar durch Einsetzen in Gleitführungen (7a, 7b) einer Wand der Form (1) zugeordnet ist.

7. Maschine nach einem oder mehreren der vorhergehenden Ansprüche, **dadurch gekennzeichnet,** daß die Mittel zur Bestimmung des Bremsens oder Anhaltens der Hülle (8) in ihrer Gleitbewegung in Kontakt mit dem hüllehaltenden Rohr (6) aus zwei im wesentlichen einander gegenüberliegend angeordneten Kufen (9,10) bestehen, welche durch mit Differenzdruck betriebenen Pneumatikzylindern (9a, 10a) betätigt werden.

8. Maschine nach einem oder mehreren der vorhergehenden Ansprüche, **dadurch gekennzeichnet,** daß die Vorrichtung (20) zum Festhalten des Produkts (17) auf einer Auflagefläche (21) am Ausgang vom hüllehaltenden Rohr (6) aus einer im wesentlichen vertikalen feststehenden Wand (22), die eine Längsausrichtung besitzt, und einer im wesentlichen parallelen gegenüberstehenden Wand (23) besteht, welche in einer Querrichtung bewegbar ist, um das Produkt gegen die feststehende Wand zu pressen.

Fig.1

Fig.2

EP 0 268 206 B1